# EUROPÄISCHE PATENTANMELDUNG

(11) **EP 1 377 003 A1**
(43) Veröffentlichungstag der Anmeldung: **02.01.2004**
(21) Anmeldenummer: 02012290.9
(22) Anmeldetag: 05.06.2002
(51) Int. Cl.: H04M 3/56

(54) **Verfahren und Vorrichtung zur Realisierung von Sprachkonferenzen**

(71) Anmelder: EADS TELECOM Deutschland GmbH, 85716 Unterschleissheim (DE)
(72) Erfinder: Hartl, Johann, 85323 Bergkirchen (DE)
(74) Vertreter: Hummel, Adam

(57) **Zusammenfassung**

Es wird ein Verfahren zur Realisierung von Sprachkonferenzen in einem Vermittlungsnetz mit einer Anzahl (N) von aktiven Konferenzteilnehmern (KT₁ ... KT_{N}), die über jeweils eine Teilnehmerbaugruppe mit dem Vermittlungsnetz verbunden sind, vorgeschlagen, bei dem die Berechnung der Konferenz in jeder Teilnehmerbaugruppe, die einen oder mehrere Konferenzknoten (KK₁ ... KK_{N}) bildet, erfolgt.

Dadurch wird für Sprachkonferenzen keine spezielle Hardware mehr benötigt und die maximale Anzahl von Konferenzen und Konferenzteilnehmern ist nicht mehr begrenzt, da jeder Teilnehmer des Vermittlungsnetzes an einer Konferenz teilnehmen kann.

## Beschreibung

Die Erfindung betrifft ein Verfahren zur Realisierung von Sprachkonferenzen in einem Vermittlungsnetz mit einer Anzahl von aktiven Konferenzteilnehmern, die über Teilnehmerbaugruppen mit dem Vermittlungsnetz verbunden sind und eine Vorrichtung zur Durchführung des Verfahrens.

Dabei können mehrere Teilnehmer an einer Teilnehmerbaugruppe betrieben werden und somit auch mehrere Konferenzkrinten auf einer Teilnehmerbaugruppe existieren.

In Vermittlungssystemen wie der EUROCOM Vermittlung MKS200 werden zur Realisierung von Sprachkonferenzen Konferenzbaugruppen (2 x SIGPS + SIGPST) eingesetzt. Bei einer Konferenz in der Vermittlung MKS200 werden alle Teilnehmer sternförmig zu dieser Konferenzbaugruppe geroutet, damit die Nutzkanalinformationen der einzelnen Konferenzteilnehmer errechnet werden können.

Dabei ergeben sich die Nachteile, daß einerseits für Sprachkonferenzen eine spezielle Hardware benötigt wird und daß andererseits die maximale Anzahl von Konferenzen und Konferenzteilnehmern durch die Hardware begrenzt ist.

Es ist das Ziel der Erfindung, ein Verfahren der eingangs genannten Gattung und Vorrichtungen zu seiner Durchführung zu schaffen, die die Durchführung von Konferenzen ohne die genannten Einschränkungen gestatten.

Dies wird gemäß der Erfindung durch die im kennzeichnenden Teil von Anspruch 1 genannten Merkmale erreicht. Für Sprachkonferenzen wird keine spezielle Hardware mehr benötigt und die maximale Anzahl von Konferenzen und Konferenzteilnehmern ist nicht mehr begrenzt, da jeder Teilnehmer des Vermittlungsnetzes an einer Konferenz teilnehmen kann.

Einzelheiten der Erfindung ergeben sich aus den Unteransprüchen und der Beschreibung, in der anhand der Zeichnung ein Ausführungsbeispiel erörtert wird. Es zeigen
- Fig. 1: schematisch die Struktur der Konferenz und
- Fig. 2: schematisch den Aufbau eines Konferenzknotens.

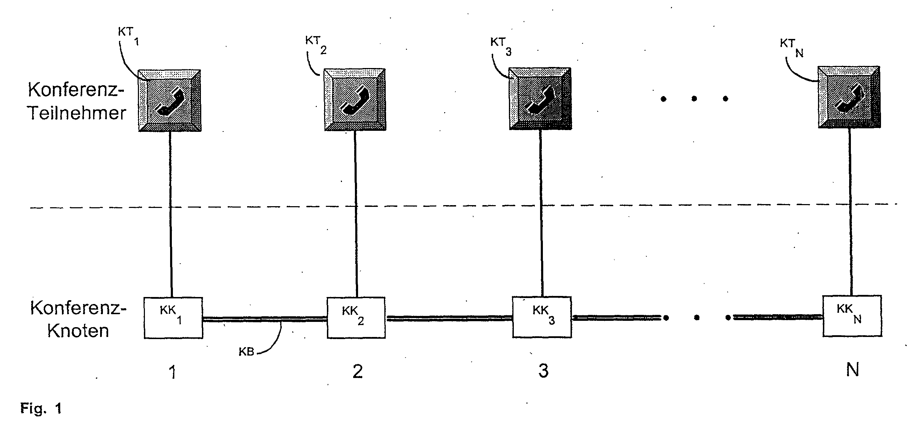

Nach Figur 1 sind die einzelnen Konferenzteilnehmer KT₁ ... KT_{N} mit ihren Konferenzknoten KK₁ -KK_{N} verbunden. In den Konferenzknoten findet die Berechnung der Konferenz statt. Diese Knoten sind auf den Teilnehmerbaugruppen in Form von Signalprozessor-Programmen DSP realisiert. Die Konferenzknoten ihrerseits sind untereinander mit einem Konferenz-Bus KB verbunden.

Für die folgenden Abschnitte gilt:
- Konferenzteilnehmer:: 1 - N
- aktuelle Konferenzknoten:: 1 ≤ k ≥ N .

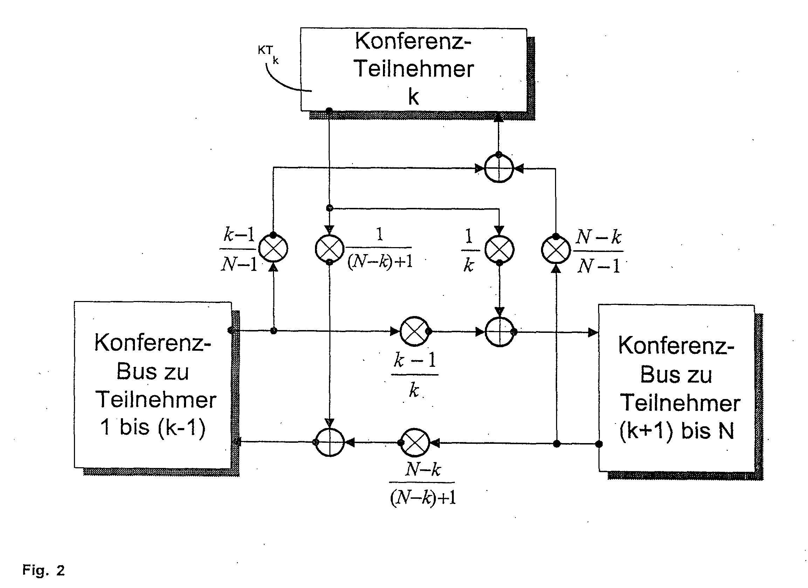

Das Kernstück der Konferenz ist der Teil in den Konferenzknoten, in dem die Nutzkanaldaten der Konferenzteilnehmer vermischt werden. Hierzu wird auf Figur 2 verwiesen.

Die Berechnung ist so ausgelegt, daß auf den Konferenzbussen alle Teilnehmer immer mit den gleichen Pegeln senden bzw. empfangen werden.

In dem Konferenzknoten KKₖ wird für den k-ten Konferenz-Teilnehmer KTₖ das Nutzsignal aus den Konferenz-Bussen mit der entsprechenden Gewichtung der Anzahl N der Teilnehmer, die auf dem Bus sind, entnommen, addiert und an den Teilnehmer KTₖ geleitet. Ebenso wird das Signal des Teilnehmers KTₖ auf den Konferenz-Bus mit der entsprechenden Gewichtung addiert, so daß die einzelnen Teilnehmer, die bereits auf dem Bus zur Verfügung stehen, alle mit derselben Gewichtung vorhanden sind. Damit der maximale Pegel auf dem Konferenzbus nicht überschritten wird, muß das Bus-Signal in jedem Konferenzknoten entsprechend angepaßt werden.

Zur konkreten Realisierung stehen in dem bekannten Vermittlungssystem MKS zwei Arten von Konferenz-Bussen zur Verfügung. Sie unterscheiden sich durch die Sprachqualität, die sie übertragen können und durch die Netzlast, die sie produzieren. Die Art des Konferenz-Busses beeinflußt ebenfalls die Struktur der Programme in den einzelnen Konferenzknoten.

### 64kBit MTS Konferenz-Bus:

Über die 64 kBit MTS-Verbindung werden 8 Bit PCM-Werte (A-Law) übertragen. Aus der Übertragungsrate und den 8 Bit Worten ergibt sich eine Samplerate von 8 kHz. Zur Berechnung der Konferenz müssen die Nutzinformationen aller Teilnehmer an diese 8 kHz Struktur angepaßt werden. Als Vorteil ergibt sich eine gute Sprachqualität, der aber eine entsprechend große Netzlast gegenübersteht.

### 32kBit DCDM Konferenz-Bus:

Der 32 kBit DCDM Konferenz-Bus verbindet die Konferenzknoten über eine Standard DCDM-Verbindung. Aus den DCDM- Samples werden mit einem Transcodierungsalgorithmus PCM-Werte gebildet. Diese transcodierten PCM-Werte liegen ebenfalls mit der Samplerate von 32 kHz vor. Zur Berechnung der Konferenz müssen die Nutzinformationen aller Teilnehmer an diese 32 kHz Struktur angepaßt werden. Als Vorteil ergibt sich eine kleine Netzlast, der aber eine schlechtere Sprachqualität gegenübersteht.

Den einzelnen Konferenzknoten muß ihre Position im Konferenz-Bus mitgeteilt werden (k und N). Diese Position kann dynamisch geändert werden. Steigt ein Teilnehmer aus einer Konferenz aus, so muß allen Konferenzknoten eine neue Position mitgeteilt werden.

Die Konferenzknoten werden direkt auf den Signalprozessoren (DSP) der Teilnehmerbaugruppen realisiert.

Die wesentlichen Vorteile der Erfindung liegen also
- in der Realisierung eines Leistungsmerkmals als Software, wodurch keine Herstellungskosten anfallen,
- in zusätzlichen freien Steckplätzen in der Vermittlung, da keine Konferenz-Hardware benötigt wird. Diese Steckplätze können zusätzlich mit anderen Baugruppen bestückt werden.
- und in unbegrenzter Anzahl von Konferenzen und Konferenzteilnehmern im System, da jeder Teilnehmer an einer Konferenz teilnehmen kann. Bisher war die Anzahl der Konferenzen und Konferenzteilnehmer durch die Hardware begrenzt.

## Patentansprüche

1. Verfahren zur Realisierung von Sprachkonferenzen in einem Vermittlungsnetz mit einer Anzahl (N) von aktiven Konferenzteilnehmern (KT₁ ... KT_{N}), die über jeweils eine Teilnehmerbaugruppe mit dem Vermittlungsnetz verbunden sind, **dadurch gekennzeichnet,**
**daß** die Berechnung der Konferenz in jeder Teilnehmerbaugruppe, die einen Konferenzknoten (KK₁ ... KK_{N}) bildet, erfolgt.

2. Verfahren nach Anspruch 1, **dadurch gekennzeichnet, daß** in jedem Konferenzknoten (KK₁ ... KK_{N}) aus den vermischten Nutzkanaldaten der aktiven Konferenzteilnehmer das für den zugeordneten Konferenzteilnehmer (KKₖ) bestimmte Nutzsignal aus dem Konferenzbus unter Gewichtung entsprechend der Anzahl der insgesamt am Bus befindlichen aktiven Teilnehmer entnommen, addiert und an den Teilnehmer (KTₖ) geleitet wird.

3. Verfahren nach Anspruch 1 oder 2, **dadurch gekennzeichnet, daß** das Signal jedes Konferenzteilnehmers (KTₖ) auf dem Konferenz-Bus addiert wird, wobei das Bussignal in jedem Konferenzknoten (KKₖ) entsprechend der Zahl der aktiven Teilnehmer (N) zum Einhalten eines Maximalpegels angepaßt wird.

4. Verfahren nach einem der vorhergehenden Ansprüche, **dadurch gekennzeichnet, daß** über das Bussystem jedem Konferenzknoten die jeweils aktuelle Zahl (N) der Gesamtteilnehmer und die eigene Ordnungsnummer (k) mitgeteilt werden.

5. Vorrichtung zur Realisierung von Sprachkonferenzen in einem Vermittlungsnetz mit einer unbestimmten Anzahl (N) von Konferenzteilnehmern (KT₁ ... KT_{N}), die über jeweils eine Teilnehmerbaugruppe mit dem Vermittlungsnetz verbunden sind, **dadurch gekennzeichnet,**
**daß** jeder Teilnehmerbaugruppe ein oder mehrere Konferenzknoten (KK₁ ... KK_{N}) zugeordnet sind,
**daß** die Konferenzknoten (KK₁ ... KK_{N}) untereinander über einen Konferenz-Bus (KB) verbunden sind, und
**daß** die Konferenzknoten (KK₁ ... KK_{N}) als Signalprozessorprogramme zur Berechnung der Konferenz, realisiert sind.
